# EUROPÄISCHE PATENTSCHRIFT

(11) **EP 2 841 817 B1**
(45) Veröffentlichungstag und Bekanntmachung des Hinweises auf die Patenterteilung: **30.12.2015**
(21) Anmeldenummer: 13709830.7
(22) Anmeldetag: 04.03.2013
(51) Int. Cl.: B60N 2/06, B60N 2/44, F16H 25/20, F16H 55/22

(54) **GETRIEBESPINDEL SOWIE SPINDELGETRIEBE, SOWIE VERFAHREN ZUM HERSTELLEN EINER GETRIEBESPINDEL**
DRIVE SPINDLE AND SPINDLE DRIVE AND METHOD FOR PRODUCING A DRIVE SPINDLE
BROCHE DE TRANSMISSION, TRANSMISSION À BROCHE, ET PROCÉDÉ DE FABRICATION D'UNE BROCHE DE TRANSMISSION

(30) Priorität: 27.04.2012 DE 102012207129
(43) Veröffentlichungstag der Anmeldung: 04.03.2015
(73) Patentinhaber: Robert Bosch GmbH, 70442 Stuttgart (DE)
(72) Erfinder: ANGERER, Christof, 77886 Lauf (DE); PETER, Gilles, F-67360 Morsbronn Les Bains (FR)
(86) Internationale Anmeldenummer: PCT/EP2013/054283
(87) Internationale Veröffentlichungsnummer: WO 2013/159968

(56) Entgegenhaltungen:
- WO-A1-2004/020870
- DE-A1-102005 046 356
- US-A1- 2009 206 644

## Beschreibung

### Stand der Technik

Die vorliegende Erfindung betrifft eine Getriebespindel, ein Spindelgetriebe, sowie ein Herstellungsverfahren einer Getriebespindel, mit einer verbesserten Übertragung von axialen Kräften, welche insbesondere bei einem Unfall auftreten können, nach der Gattung der unabhängigen Ansprüchen.

Mit der EP 0 759 374 A2 ist eine Vorrichtung zum Verstellen eines Sitzes im Kraftfahrzeug bekanntgeworden, die gegenüber dem Normalbetrieb erheblich größere Kräfte aufnehmen kann, wie sie beispielsweise bei einem Verkehrsunfall verursacht werden. Hierbei ist es wichtig, dass der Fahrzeugsitz fest mit der Karosserie verbunden bleibt, um die Funktion der vorgesehenen Schutzmaßnahmen für die Fahrzeuginsassen (Sicherheitsgurt, Airbag) zu gewährleisten. Dabei ist eine Spindelmutter, die eine Gewindespindel aufnimmt, fest mit der Karosserie verbunden. Die Gewindespindel wird über ein Schneckengetriebe von einem Elektromotor angetrieben, der seinerseits fest mit dem Sitz verbunden ist. Das Getriebegehäuse des Schneckengetriebes ist aus Kunstoff gefertigt und über ein weiteres Gehäuseteil mit dem Antriebsmotor verbunden. Wird der Antriebsmotor betätigt, dreht sich die Gewindespindel und verschiebt das Getriebegehäuse einschließlich Antriebsmotor und Sitz gegenüber der Spindelmutter. Um beispielsweise bei einem Auffahrunfall das Losreißen des Getriebegehäuses von der Gewindespindel zu verhindern, ist ein zusätzliches metallisches, u-förmiges Stützteil vorgesehen, das das Getriebegehäuse über einen Gelenkbolzen mit dem Antriebsmotor und somit mit dem Sitz verbindet. Kann das Getriebegehäuse aus Kunstoff dem hohen Kraftfluss nicht standhalten, wird es mittels einer zusätzlichen Spindelmutter durch das metallische Stützteil gehalten.
Nachteil dieser Ausführungen ist, dass zusätzlich zum kompletten Getriebegehäuse eine aufwendige Stützkonstruktion notwendig ist, die die Anzahl der Bauteile erhöht und zusätzlichen Bauraum beansprucht.

Die EP1223073 B1 zeigt eine Getriebe-Antriebseinheit, bei der ein Schneckenrad aus Kunststoff auf einer Gewindespindel drehfest angeordnet ist. Hierbei ist innerhalb des Schneckenrads auf der Gewindespindel ein ringförmiges Stützelement befestigt, das von dem Schneckenrad umschlossen wird. Bei dieser Ausführung vergrößert sich jedoch der Außendurchmesser des Schneckenrads, wodurch das ganze Getriebegehäuse entsprechend größer dimensioniert werden muss.

WO 2004/020870 A offenbart eine Getriebespindel gemäß dem Oberbegriff des Anspruchs 1.

### Offenbarung der Erfindung

Die erfindungsgemäße Getriebespindel, sowie das Verfahren zur Herstellung einer solchen, mit den kennzeichnenden Merkmalen der unabhängigen Ansprüche haben den Vorteil, dass durch die Ausbildung eines Einstich-Bereichs auf der Getriebespindel, in den das Material des Getriebezahnrads eingreift, die Crash-Festigkeit des Spindelgetriebes deutlich erhöht wird. Durch die Ausbildung des Einstich-Bereichs wird zusätzlich zu einem ersten axialen Bund des ersten Haltebereichs ein zweiter axialer Bund des zweiten Haltebereichs geschaffen, der ein Abgleiten des aus Kunststoff gefertigten Getriebezahnrads von der Getriebespindel verhindert. Aufgrund des verwendeten Kunststoffmaterials verhält sich das Scherverhalten zwischen dem Getriebezahnrad und der Getriebespindel anders als bei einer reinen Metall-Metallkombination, da der Kunststoff ein gewisses Fließverhalten bzw. eine größere elastische Verformbarkeit als Metall aufweist. Anders als bei einer rein Metall-Metallverbindung bewirkt der durch den Einstich-Bereich geschaffene zweite Bund des zweiten Halteelements einen Festigkeitsanstieg von beispielsweise 1 bis 3 KN (Kilonewton). Durch die Ausbildung dieser zweiten mechanischen Barriere entspricht einer weiteren Scherschulter, die zusätzliche Zugkräfte aufnimmt. Diese zusätzliche Scherschulter wird durch die Differenz der Außendurchmesser des zweiten Haltebereichs gegenüber dem Einstich-Bereich erzeugt. Vorteilhafterweise ist der Abstand zwischen der Stirnfläche des radialen Lagenzapfens und dem Getriebegehäuse so gewählt, dass sich diese Stirnfläche im Crash-Fall am Getriebegehäuse abstützt und somit die gesamte axiale Erstreckung des Getriebezahnrads als effektive Scherlänge mit der Getriebespindel 8 dient.

Die beiden Scherschultern des ersten und zweiten Haltebereichs können fertigungstechnisch besonders günstig hergestellt werden, indem das sich über die gesamte Länge der Getriebespindel erstreckende Spindelgewinde bezüglich der Spindelmutter jeweils vor dem ersten und zweiten Haltebereich abgetragen - beispielsweise abgedreht - wird. Dabei entspricht der Durchmesser dieser abgetragenen Bereiche des Einstich-Bereichs und des Montagebereichs näherungsweise dem Fußkreisdurchmesser des Spindelgewindes, wodurch die mechanische Stabilität der Getriebespindel nicht beeinträchtigt wird. Durch die in den Haltebereichen ausgebildeten Gewindegänge wird ein zusätzlicher Formschluss mit dem aufgespritzen Getriebezahnrad geschaffen, der die Zugfestigkeit weiter erhöht. Durch das Abtragen des Spindelgewindes kann auf das Anformen eines zusätzlichen Halteelements mit größerem Aussendurchmesser verzichtet werden, wodurch insgesamt der Außendurchmesser des Getriebezahnrads nicht vergrößert wird.

Durch die in den Unteransprüchen aufgeführten Maßnahmen ergeben sich vorteilhafte Weiterbildungen und Verbesserungen der in den unabhängigen Ansprüchen angegebenen Merkmalen. So kann das Spindelgetriebe besonders kompakt gebaut werden, wenn das Getriebezahnrad auf der Getriebespindel als Schneckenrad ausgebildet ist, dessen am Außenumfang angeordnete Schneckenverzahnung mit einer entsprechenden Antriebsschnecke, beispielsweise eines Elektromotors kämmt. Durch diese Schneckenverzahnung kann gegebenenfalls auch eine gewünschte Selbsthemmung des Getriebes realisiert werden.

Um das Spindelgetriebe kompakt zu bauen, ist das Getriebezahrad an einem axialen Ende der Getriebespindel angeordnet, die sich axial an einem Anlaufelement abstützt. Um die Reibung zu minimieren, liegt die Getriebespindel mit einer gewölbten Fläche an dem Anlaufelement an. Dazu kann beispielsweise eine Metallkugel am axialen Ende des Getriebezahnrads aufgenommen - insbesondere umspritzt - werden. Dadurch stützt sich die Getriebespindel aus Metall direkt an dem Anlaufelement aus Metall ab, ohne dass Kunststoffelemente im Kraftfluss liegen.

Zur Lagerung des Getriebezahnrads sind an diesem zwei Lagerzapfen angeformt, die direkt im Gehäusegrundkörper des Getriebegehäuses gelagert sind. Dadurch sind keine zusätzlichen radialen Lagerelemente für das Getriebezahnrad notwendig. Durch den größeren Außendurchmesser der Außenverzahnung ist am Getriebezahnrad ein zusätzlicher Bund zwischen den Lagerzapfen und der Außenverzahnung ausgebildet, der sich beispielsweise an einer Abstützscheibe abstützt, sobald axiale Zugkräfte auf die Getriebespindel einwirken.

Das Getriebegehäuse weist im Bereich, in dem die Getriebespindel aus der Gehäusewand des Getriebegehäuses heraustritt, ein weiteres Abstützelement auf, um die Getriebespindel im Crash-Fall im Getriebegehäuse zu halten. Hierzu ist die Gehäusewand zumindest im Bereich um die Getriebespindel herum aus Metall ausgebildet, insbesondere als metallenes Gehäuseteil, das einen Getriebegehäusegrundkörper aus Kunststoff umschließt. Zur Montage der Getriebespindel weist diese im Bereich der Gehäusewand einen Montagebereich mit verringertem Durchmesser auf, so dass der Innendurchmesser der Durchgriffsöffnung der Gehäusewand geringer ist als der Außendurchmesser des Getriebezahnrads, insbesondere als dessen Lagerzapfen. Bevorzugt kann der Innendurchmesser der Durchgriffsöffnung der Gehäusewand kleiner ausgebildet werden als der Außendurchmesser des ersten Haltebereichs, der innerhalb des Getriebezahnrads angeordnet ist, so dass eine radiale Überschneidung des Haltebereichs mit der Durchgangsöffnung vorliegt.

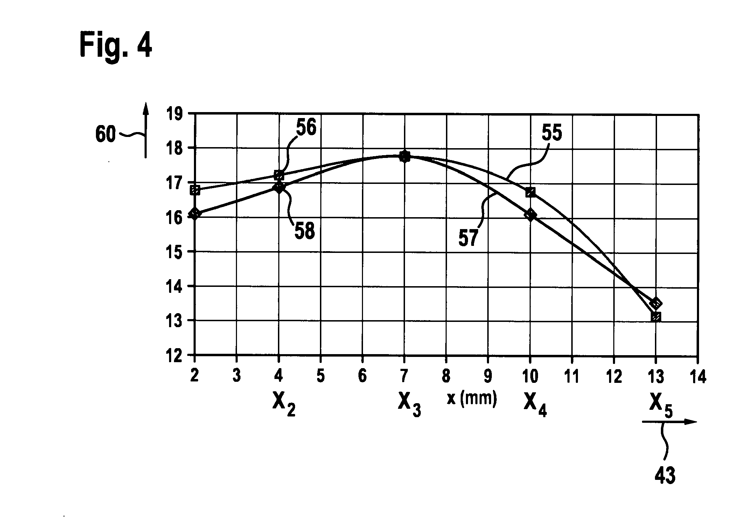

Für die erfindungsgemäße Ausführung für Sitz-Verstellantriebe erstreckt sich der Einstich-Bereich in axialer Richtung in etwa 2-12mm, wobei entsprechend der Darstellung in Figur 4 eine axiale Erstreckung von ca. 6-8mm bevorzugt wird. Dabei können die axialen Ränder des Einstich-Bereichs abgeschrägt werden, wobei sich die Maße für die axiale Erstreckung des Einstich-Bereichs auf den Bereich des vollständig reduzierten Durchmessers beziehen.

Der Außendurchmesser des Einstich-Bereichs liegt vorzugsweise in der Größenordnung des Kerndurchmessers des Spindelgewindes. In einer Variation der Erfindung kann jedoch dieser Durchmesser des Einstich-Bereichs auch größer oder kleiner als der Kerndurchmesser des Spindelgewindes sein, solange er kleiner ist als der Außendurchmesser der Haltebereiche.

Wenn für die Ausbildung des Einstich-Bereichs das Gewinde abgetragen wird, so wird eine maximale radiale Einstichtiefe erzielt, ohne dass dadurch die mechanische Stabilität der Getriebespindel reduziert wird. Die Haltebereiche können durch den Außendurchmesser des Spindelgetriebes gebildet werden oder durch einen anders geformten radialen Materialüberstand. Die Zugfestigkeit des Spindelgetriebes wird dabei durch die Ausbildung der umlaufenden Scherschultern von einer radialen Tiefe von 1-2mm deutlich erhöht.

Besonders günstig ist es, am Außendurchmesser zumindest des ersten Haltebereichs einen radialen Formschluss mit dem Getriebezahnrad bezüglich der Umfangsrichtung zu bilden, der als Verdrehsicherung dient. Dieser kann als Rändelung oder als eine radiale Vertiefung ausgebildet sein, so dass das Kunststoffmaterial des Getriebezahnrads radial in den Haltebereich eingreift. Die Rändelung wird dabei bevorzugt am Außendurchmesser des Spindelgewindes am ersten und/oder zweiten Haltebereich eingedrückt.

Durch die Ausbildung des erfindungsgemäßen Spindelgetriebes können bei einem Unfall höhere Crash-Kräfte aufgenommen werden, ohne dass die Getriebespindel aus dem Getriebegehäuse herausgerissen wird. Durch die erfindungsgemäße Steigerung der Festigkeit, mit der das Getriebezahnrad auf der Getriebespindel befestigt ist, kann in Kombination mit einem Abstützelement an der Gehäusewand des Getriebegehäuses - insbesondere im Bereich der Durchgangsöffnung für die Getriebespindel - dadurch die Position des Sitzes und des Passagiers in einer definierten Position gehalten werden. Dadurch wird die optimale Wirkung der Rückhaltesysteme (Airbags, Gurtstraffer, Precrash-Maßnahmen) gewährleistet.

Zur Aufnahme hoher Crash-Kräfte ist es besonders günstig, das Getriebegehäuse aus Kunststoff mit einem stabileren Rahmen zu umschließen, wie dies beispielsweise durch einen Metallbügel oder Metallkäfig realisiert werden kann. Das Spindelgetriebe wird besonders effizient von einem Elektromotor angetrieben. Hierbei kann beispielsweise auf einer Ankerwelle eine Schnecke angeordnet werden, die das als Schneckenrad ausgebildete Getriebezahnrad antreibt. Alternativ kann das Getriebezahnrad auch über eine flexible Welle angetrieben werden, die mit dem Elektromotor verbunden ist.

Bei dem erfindungsgemäßen Herstellungsverfahren der Getriebespindel werden vorteilhaft keine zusätzlichen Bauteile und auch kein zusätzlicher Werkstoff benötigt, da aus einer durchgängigen Gewindestange gewisse Bereiche des Gewindes herausgeschnitten werden. Ein somit gebildeter Montage- und Einstich-Bereich, der ganz oder teilweise mit dem Getriebezahnrad umspritzt wird, erhöht die Crash-Festigkeit des Spindelgetriebes deutlich.

### Zeichnung

Nachfolgend werden bevorzugts Ausführungsbeispiele der Erfindung unter Bezugnahme auf die begleitende Zeichnung im Detail beschrieben. In der Zeichnung ist:
- Figur 1: eine perspektivische Explosionsdarstellung eines Spindelgetriebes gemäß einem Ausführungsbeispiel der Erfindung,
- Figur 2: eine Schnittansicht einer weiteren Ausführung eines erfindungsgemäßen Spindelgetriebes,
- Figur 3: eine schematische Schnittansicht einer Getriebespindel mit unterschiedlichen Ausführungen von Einschnitt-Bereichen, und
- Figur 4: eine grafische Darstellung der Spindelfestigkeit in Abhängigkeit der Einstichlänge.

### Beschreibung der Ausführungsbeispiele

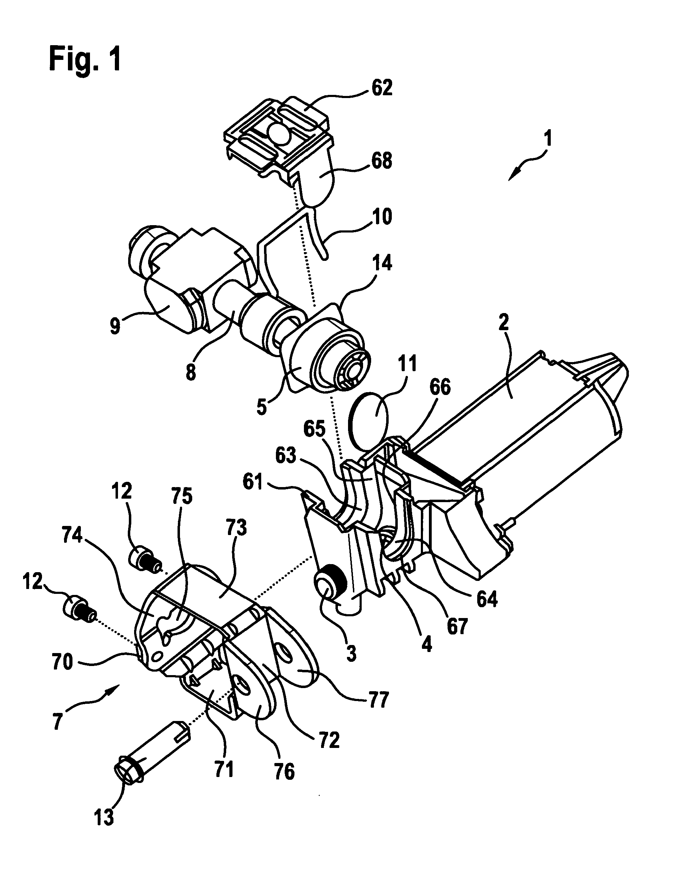

Wie insbesondere aus Figur 1 ersichtlich ist, umfasst eine als Spindelgetriebe ausgebildete Getriebe-Antriebseinheit 1 einen Antriebsmotor 2 mit einer Abtriebswelle 3, an welcher eine Schnecke 4 vorgesehen ist. Die Getriebe-Antriebseinheit 1 umfasst ferner eine Getriebespindel 8, welche quer zur Abtriebswelle 3 angeordnet ist. An der Getriebespindel 8 ist ein Getriebezahnrad 5 als Schneckenrad angeordnet, welches sich mit der Schnecke 4 der Abtriebswelle 3 im Eingriff befindet. Auf der Getriebespindel 8 ist ferner eine Spindelmutter 9 vorgesehen. Die Spindelmutter 9 bildet eine erste Schnittstelle, beispielsweise zu einem Fahrzeugsitz.

Die Getriebe-Antriebseinheit 1 umfasst ferner ein erstes Gehäuseteil 6 aus Kunststoff und ein zweites Gehäuseteil 7 aus Metall, vorzugsweise aus Aluminium oder Stahl. Das erste Gehäuseteil 6 ist seinerseits wieder zweiteilig mit einem Gehäusegrundkörper 61 und einem Gehäusedeckel 62 gebildet. Zwischen Gehäusegrundkörper 61 und Gehäusedeckel 62 kann beispielsweise eine Clipverbindung vorgesehen sein. Der Gehäusedeckel 62 umfasst ferner eine Lasche 68, welche zur Deckelfläche etwa im 90°-Winkel angeordnet ist. Das erste und zweite Gehäuseteil 6, 7 bilden ein Getriebegehäuse 20, in welchem die Schnecke 4 und das Schneckenrad 5 aufgenommen sind.

Am ersten Gehäuseteil 6 sind alle Funktionsflächen zur Lagerung der Getriebespindel 8 vorgesehen. Genauer sind am ersten Gehäuseteil 6 ein erstes Radiallager 63, ein zweites Radiallager 64, ein erstes Axiallager 65 und ein zweites Axiallager 66 vorgesehen. Am aus Metall hergestellten zweiten Gehäuseteil 7 sind weitere Schnittstellen zur Anbindung, beispielsweise an eine Fahrzeugkarosserie, in Form eines ersten Flansches 76 und eines zweiten Flansches 77 vorgesehen. Hierzu weisen die beiden Flansche 76, 77 jeweils eine Durchgangsöffnung auf, in welche eine Distanzhülse 13 eingeführt ist. Das zweite, metallische Gehäuseteil 7 weist eine umlaufend geschlossene Gestalt auf und umfasst ein erstes Seitenteil 71, ein zweites Seitenteil 72, ein drittes Seitenteil 73 und ein viertes Seitenteil 74. Im vierten Seitenteil 74 ist eine Durchgriffsöffnung 75 zur Durchführung der Getriebespindel 8 vorgesehen. Ferner ist am vierten Seitenteil 74 eine Überlappung 70 vorgesehen. Das zweite Gehäuseteil 7 kann dabei im Bereich der Überlappung 70 geöffnet werden und so über die Getriebespindel 8 gefügt werden. Anschließend wird die Überlappung 70 wieder hergestellt und die beiden Teilbereiche des zweiten Seitenteils 74 werden beispielsweise mittels zweier Schrauben 12 miteinander verbunden.

Im montierten Zustand ist zumindest ein Teilbereich des ersten, aus Kunststoff hergestellten Gehäuseteils 6 von dem zweiten Gehäuseteil 7 umgeben. Das zweite Gehäuseteil 7 wird dabei insbesondere zur Fixierung der Getriebe-Antriebseinheit 1 an beispielsweise einer Karosserie oder einem Sitzteil eines Fahrzeugs, verwendet.

Ferner umfasst die Getriebe-Antriebseinheit 1 ein Plattenelement 11, welches in axialer Richtung 16 der Getriebespindel 8 an einem ersten Ende 81 der Getriebespindel 8 angeordnet ist. Das Plattenelement 11 liegt dabei parallel zur Lasche 68 des Gehäusedeckels 62 und befindet sich in Anlage mit dieser Lasche 68. Das Plattenelement 11 ist dabei in einer Nut 67 im Gehäusegrundkörper 61 angeordnet. Ferner ist eine Anlaufscheibe 14 vorgesehen, welche unmittelbar benachbart zum Schneckenrad 5 angeordnet ist und an welcher das Federelement 10 anliegt.

Somit können erfindungsgemäß Schnittstellen der Getriebe-Antriebseinheit 1 an der Spindelmutter 9 sowie den Flanschen 76, 77 von Funktionsflächen, welche ausschließlich am ersten Gehäuseteil 6 angeordnet sind, getrennt werden. Somit kann das erste Gehäuseteil 6 aus Kunststoff gespritzt werden, wobei direkt auch die jeweiligen Funktionsflächen mitgespritzt werden können, ohne dass eine Nachbehandlung der Funktionsflächen nötig ist. Die Kraft aufnehmenden Schnittstellen am zweiten Gehäuseteil 7 können dabei aus Metall geformt werden, so dass z.B. Kräfte bei einem Unfall nicht unmittelbar zu einer Zerstörung der Getriebe-Antriebseinheit 1 führen. Die Kräfte können insbesondere über die Flansche 76, 77 in eine Kundenstruktur weitergeleitet werden. Wirken axiale Zug- oder Druckkräfte 54 auf die Getriebespindel 8, erfolgt dabei eine Abstützung der Getriebespindel 8 bzw. des Schneckenrads 5 in axialer Richtung 16 immer an einem der Axiallager am Gehäusegrundkörper 61 bzw. dem Gehäusedeckel 62. Eine radiale Abstützung erfolgt an den Radiallagern 63, 64 des Gehäusegrundkörpers 61. Da ferner Schnittstellen der Getriebe-Antriebseinheit 1 zu externen Bauteilen lediglich an der Spindelmutter 9 sowie dem zweiten Gehäuseteil 7 vorgesehen sind, müssen beispielsweise im Fahrzeugbereich nur Varianten dieser beiden Bauteile für verschiedene Kunden vorgehalten werden.

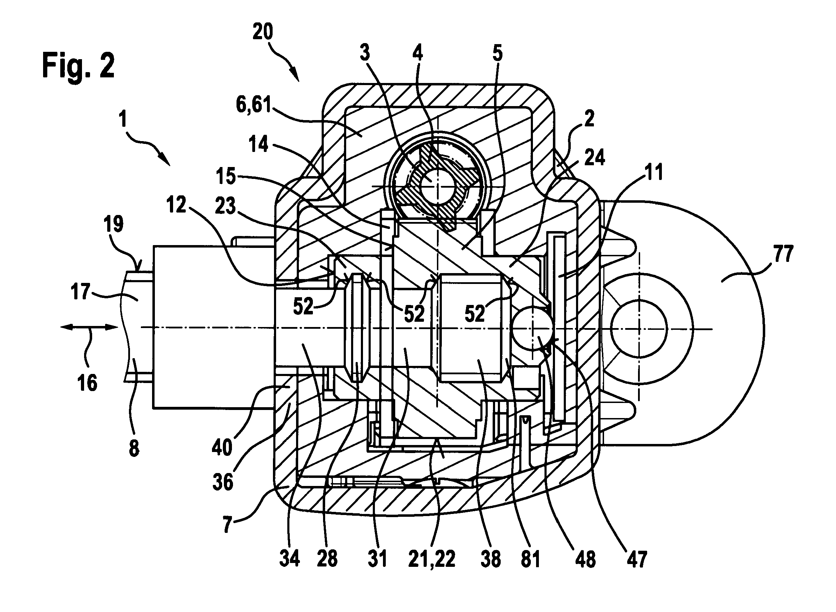

In Figur 2 ist ein Schnitt durch eine weitere Getriebe-Antriebsheinheit 1 dargestellt, wobei der Kern der Getriebespindel 8 nicht als Schnitt gezeichnet ist. Das als Schneckenrad ausgebildete Getriebezahnrad 5 weist eine Außenverzahnung 21 auf, die als Schneckenradverzahnung 22 ausgebildet ist, und mit der Verzahnung der Abtriebswelle 3 kämmt. Die Abtriebswelle 3 weist im Ausführungsbeispiel eine viergängige Schnecke 4 auf. Axial benachbart zur Außenverzahnung 21 weist das Getriebezahnrad 5 einen ersten Lagerzapfen 23 hin zum Aufnahmebereich 17 auf, der in dem ersten Radiallager 63 des Gehäusegrundkörpers 61 gelagert ist. Auf der gegenüberliegenden Seite erstreckt sich ein zweiter Lagerzapfen 24, der entsprechend in dem zweiten Radiallager 64 des Gehäusegrundkörpers 61 gelagert ist. Das Getriebezahnrad 5 ist drehfest auf die Getriebespindel 8 aufgespritzt. Hierzu weist die Getriebespindel 8 innerhalb einer axialen Erstreckung 27 des Getriebezahnrads 5 einen ersten Haltebereich 28 auf, dessen Außendurchmesser 29 größer ist, als der Durchmesser 30 des sich daran anschließenden Einstich-Bereichs 31. Axial daran anschließend, vom Aufnahmeberfeich 17 weg gewandt, ist ein zweiter Haltebereich 38 mit einem Außendurchmesser 39 angeordnet, der ebenfalls größer ist, als der Durchmesser 30 des Einstich-Bereichs 31. Somit ist zwischen den beiden Haltebereichen 28, 38 der Einstich-Bereich 31 mit geringerem Durchmesser 30 angeordnet, der mit dem Getriebezahnrad 5 einen Formschluss bezüglich einer axialen Krafteinwirkung 54 darstellt. Zwischen dem ersten Haltebereich 28 und dem Aufnahmebereich 17 ist ein Montagebereich 34 mit geringerem Durchmesser 34 als der Außendurchmesser 29 des ersten Haltebereichs 28 angeordnet. Am Montagebereich 34 ist eine Gehäusewand 36 des Getriebegehäuses 20 angeordnet, die insbesondere als Teil des zweiten Gehäuseteils 7 aus Metall ausgebildet ist. Diese Gehäusewand 36 umschließt die Getriebespindel 8 und bildet einen Anschlag 37, an dem sich das Getriebezahnrad 5 bei axialer Zugbelastung 54 axial abstützt. Das Getriebezahnrad 5 erstreckt sich axial über die gesamte axiale Breite 42 des ersten Haltebereichs 28, sowie über die gesamte axiale Breite 43 des Einstich-Bereichs 31, sowie insbesondere über die gesamte axiale Breite 44 des zweiten Haltebereichs 38. Im Ausführungsbeispiel ist an dem dem Aufnahmebereich 17 gegenüberliegenden Ende 46 der Getriebespindel 8 ein kugelförmiges Element 48 angeordnet, das mit einer gewölbten Fläche 47 an dem Plattenelement 11 als Anschlag anliegt. Das kugelförmige Element 48 ist hier radial vom Getriebezahnrad 5 - vorzugsweise vom zweiten Lagerzapfen 24 - umschlossen. Zur zusätzlichen axialen Abstützung ist zwischen der Außenverzahnung 21 und dem Gehäusegrundkörper 61 eine ringförmige Anlaufscheibe 14 angeordnet, an der bei einer axialen Zugbelastung 54 der Spindel ein axialer Bund 15 der Außenverzahnung 21 axial anliegt. Am äußeren Umfang weist der erste Haltebereich 28 und/oder der zweite Haltebereich 38 eine Rändelung 50 oder eine radiale Ausformungen 51 auf, die eine Verdrehung des aufgespritzten Getriebezahnrades 5 gegenüber der Getriebespindel 8 verhindern. Im Ausführungsbeispiel sind die Haltebereiche 28, 38 als Teil des Spindelgewindes 19 ausgebildet, wobei nachträglich das Gewindematerial im Einstich-Bereich 31 und im Montagebereich 34 abgetragen wurde. Der Materialabtrag kann beispielsweise mittels spanendem Verfahren, vorzugsweise mittels Abdrehen, durchgeführt werden. Dabei kann auf jeweils beiden axialen Seiten des ersten Haltebereichs 28 und/oder des zweiten Haltebereichs 38 eine Phase 52 angeformt werden.

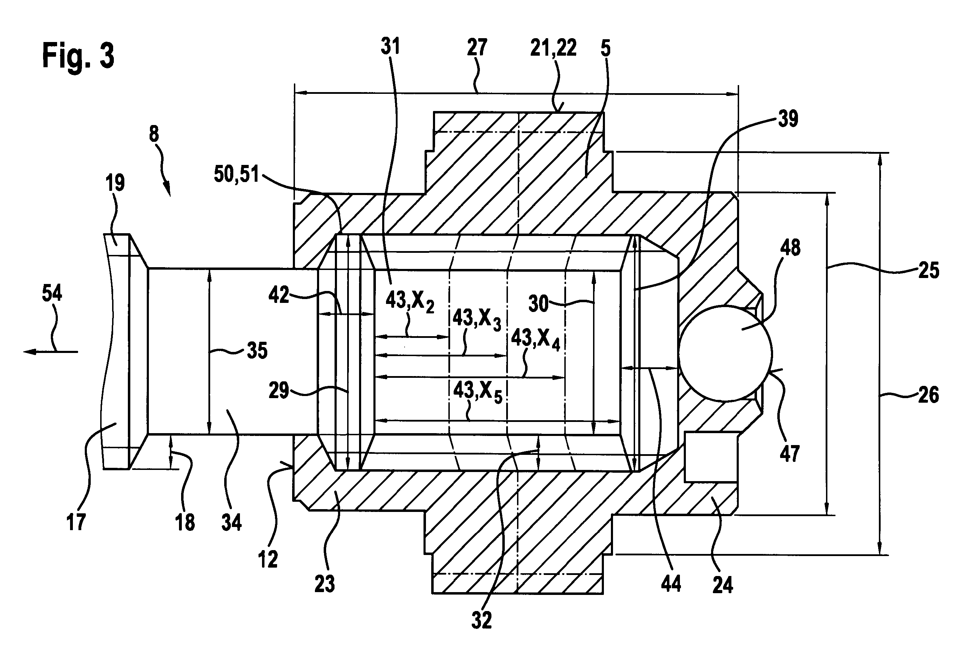

In Figur 3 ist nochmals schematisch eine Ausführung einer Gewindespindel 8 dargestellt. Dabei sind unterschiedliche Ausführungen gezeigt, bei denen die axiale Breite 43 des Einstich-Bereichs 31 variiert wird. Beispielsweise beträgt die axiale Breite 43 des Einstich-Bereichs 31 in einer ersten Ausführung X₂=4mm, in einer zweiten Ausführung X₃=7mm, in einer dritten Asuführung X₄=10mm und in einer vierten Ausführung X₅=13mm. Die axiale Breite 43 des Einstich-Bereichs 31 ist vorzugsweise immer größer als die Ganghöhe des Spindelgewindes 19. Der Einstich-Bereich 31 ist jeweils vollständig mit dem Getriebezahnrad 5 umspritzt, so dass das Kunststoffmaterial des Getriebezahnrads 5 innerhalb des Einstich-Bereichs 31 entsprechend variiert.

Zu diesen unterschiedlichen Ausführungen wurden jeweils Zugversuche durchgeführt, bei denen die Getriebespindel 8 aus dem Getriebegehäuse 20 mit großer Axialkraft 54 herausgezogen wurde, bis das Getriebezahnrad 5 zerbrochen ist. Dabei wurde die maximale Zugfestigkeit 60 des Getriebezahnrads 5 gemessen und in dem Diagramm der Figur 4 über der axialen Brteite 43 des Einstich-Bereichs 31 dargestellt. In der oberen Kurve 55 mit den quadratischen Messpunkten 56 weist der erste Haltebereich 28 jeweils am äußeren Umfang eine Rändelung 50 auf, bei der zweiten unteren Kurve 57 mit den rautenförmigen Messpunkten 58 weisen die Haltebereiche 28, 38 hingegen keine Rändelung 50 und keine radialen Ausformungen 51 auf. Es ist ersichtlich, dass beide Kurven 55, 56 bei einer axialen Breite 43 des Einstich-Bereichs 31 in etwa 7mm ein Maximum aufweisen. Daher wird der Einstich-Bereich 31 der erfindungsgemäßen Getriebespindel 8 vorzugsweise mit einer axialen Breite 43 näherungsweise 7mm, bzw. in einem Bereich von 6-8mm ausgebildet. Je nach Abmessung der Getriebespindel 8 und des Getriebezahnrads 5 können für den Einstich-Bereich 31 auch axiale Breiten 43 gewählt werden, die im Bereich von 5-9mm oder auch in einem Bereich von 2-12mm liegen. In einer typischen Ausführung weist hier beispielsweise der Einstich-Bereich 31 einen Durchmesser 30 von 8-10mm auf, wobei der Außendurchmesser 29 und 39 des ersten und zweiten Haltebereichs 28, 38 in etwa 11-13mm betragen. D. h. dass die Zahnhöhe 18 der Gewindegänge des Spindelgewindes 19 in etwa 1-2mm beträgt. Die Außendurchmesser 29, 39 der beiden Lagezapfen 23, 24 liegen typischerweise in der Größenordnung von 14-18mm, die Außenverzahnung 21 weist beispielsweise einen Fußkreisdurchmesser 26 im Bereich von 18-22mm auf. Aus Bauraumgründen weist das Getriebezahnrad 5 eine maximale axiale Erstreckung 27 von beispielsweise 20-30mm, insbesondere etwa 25mm auf. Das Getriebezahnrad 5 ist vorzugsweise aus POM-Kunststoff gefertigt, das beispielsweise auf eine Gewindespindel 8 aus Metall aufgespritzt wird.

Aus dem Diagramm der Figur 4 ist ersichtlich, dass die Ausformung eines Rändels 50 bzw. einer radialen Ausformung 51 am Außenumfang des ersten oder zweiten Haltebereichs 28, 38 nicht nur eine Drehsicherung zwischen dem Getriebezahnrad 5 und der Getriebespindel 8 bewirkt, sondern zumindest im Bereich der optimalen axialen Breite 43 des Einstich-Bereichs 31 auch die maximale Zugfestigkeit der Getriebespindel 8 im Getriebegehäuse 20 erhöht.

Die Ausführungsbeispiele erläutern die Erfindung anhand einer Sitzverstellvorrichtung, doch ist sie auch für andere Verstellbewegungen, beispielsweise als Lenkhilfe-Antrieb, einsetzbar, bei denen beim Auftreten hoher Kräfte verhindert werden soll, dass sich die Abtriebswelle 3 aus dem Getriebegehäuse 19 löst.

## Patentansprüche

1. Getriebespindel (8), insbesondere für eine Sitzverstellung oder eine Servolenkung, mit einem Spindelgewinde (19) zur Aufnahme einer Spindelmutter (9), wobei auf der Getriebespindel (8) ein Getriebezahnrad (5) aus Kunststoff drehfest aufgespritzt ist, das eine Außenverzahnung (21) aufweist, mittels der die Getriebespindel (8) in Drehbewegung versetzt werden kann, wobei innerhalb einer axialen Erstreckung (27) des Getriebezahnrads (5) die Getriebespindel (8) zwischen zwei Haltebereichen (28, 38) mit einem größeren Außendurchmesser (29, 39) einen Einstich-Bereich (31) mit einem geringeren Außendurchmesser (30) aufweist,
**dadurch gekennzeichnet, dass** der Außendurchmesser (29, 39) der beiden Haltebereiche (28, 38) durch den Außenumfang des Spindelgewindes (19) ausgebildet ist, und der Einstich-Bereich (31) dazwischen mit geringerem Außendurchmesser (31) durch Abtragen des Spindelgewindes (19) ausgebildet ist.

2. Getriebespindel (8) nach Anspruch 1, **dadurch gekennzeichnet, dass** das Getriebezahnrad (5) als ein eine äußere Schneckenverzahnung (21, 22) aufweisendes Schneckenrad (5) ausgebildet ist, das mittels einer Schnecke (4) antreibbar ist.

3. Getriebespindel (8) nach einem der vorhergehenden Ansprüche, **dadurch gekennzeichnet, dass** das Getreibezahnrad (5) an einem axialen Ende (81) der Getriebespindel (8) angeordnet ist, und das Getriebezahnrad (5) zumindest teilweise ein kugelformiges Element (48) umschließt, das als Axialanschlag (11) der Gewindespindel (8) ausgebildet ist.

4. Getriebespindel (8) nach einem der vorhergehenden Ansprüche, **dadurch gekennzeichnet, dass** das Getreibezahnrad (5) axial beidseitig der Außenverzahnung (21) jeweils sich axial erstreckende radiale Lagerzapfen (23, 24) aufweist, deren Durchmesser (25) insbesondere kleiner ist als der Fußkreisdurchmesser (26) der Außenverzahnung (21).

5. Getriebespindel (8) nach einem der vorhergehenden Ansprüche, **dadurch gekennzeichnet, dass** zwischen dem Aufnahmebereich (17) der Spindelmutter (9) und dem diesem Aufnahmebereich (17) zugewandten Haltebereich (28) - insbesondere teilweise innerhalb der axialen Erstreckung (27) des Getriebezahnrads (5) - ein Montage-Bereich (34) mit geringerem Außendurchmesser (35) angeordnet ist - vorzugsweise mit dem gleichen Außendurchmesser (30) wie der Einstich-Bereich (31).

6. Getriebespindel (8) nach einem der vorhergehenden Ansprüche, **dadurch gekennzeichnet, dass** der Einstich-Bereich (31) eine axiale Ausdehnung (43) im Bereich von 2-12mm, insbesondere im Bereich von 5-9mm, und besonders bevorzugt von 6-8mm aufweist.

7. Getriebespindel (8) nach einem der vorhergehenden Ansprüche, **dadurch gekennzeichnet, dass** der Einstich-Bereich (31) einen Außendurchmesser (30) von 8-10 mm und die Haltebereiche (28, 38) einen Außendurchmesser (29, 39) von 11-13 mm aufweisen, und insbesondere die axiale Länge (27) des Getrieberads (5) zwischen 20-30 mm, vorzugsweise etwa 25 mm beträgt.

8. Getriebespindel (8) nach einem der vorhergehenden Ansprüche, **dadurch gekennzeichnet, dass** die Differenz der Außendurchmesser (30, 29, 39) des Einstich-Bereichs (31) und der Haltebereiche (29, 39) 2-4 mm - insbesondere näherungsweise 3 mm beträgt, wobei diese Differenz vorzugsweise der doppelten Zahnhöhe (18) des Spindelgetriebes (19) entspricht.

9. Getriebespindel (8) nach einem der vorhergehenden Ansprüche, **dadurch gekennzeichnet, dass** zumindest am Außendurchmesser (29,39) von einem der Haltebereiche (28, 38) eine Rändelung (50) oder sonstige radiale Ausformungen (51) ausgebildet ist, um eine Drehsicherung für das aufgespritzte Getrieberad (5) zu bilden.

10. Spindelgetriebe (1) mit einer Getriebespindel (8) nach einem der vorhergehenden Ansprüche, **dadurch gekennzeichnet, dass** das Getriebezahnrad (5) innerhalb eines Getriebegehäuses (61, 20) gelagert ist, und der Aufnahmebereich (17) der Getriebespindel (8) aus dem Getriebegehäuse (20) ragt, und die Getriebespindel (8) von einem Abstützelement (40) zumindest teilweise umschlossen ist, wobei sich das Getriebezahrad (5) beim Einwirken einer äußeren axialen Kraft (54) mit einer axialen Stirnseite (12) am Abstützelement (40) abstützt, und das Abstützelement (40) insbesondere als Teil einer Getriebegehäusewand (36) ausgebildet ist, die am Montagebereich (34) der Getriebespindel (8) angeordnet ist.

11. Spindelgetriebe (1) mit einer Getriebespindel (8) nach einem der vorhergehenden Ansprüche, **dadurch gekennzeichnet, dass** die radialen Lagerzapfen (23, 24) dss Getriebezahnrads (5) innerhalb eines Gehäusegrundkörpers (61) aus Kunststoff gelagert sind, der von einem Metallbügel (71, 72, 73, 74) des Getriebegehäuses (20) umschlossen ist, und das Spindelgetriebe (1) insbesondere einen Elektromotor (2) aufweist, der das Getriebezahrad (5) antreibt.

12. Verfahren zum Herstellen einer Getriebespindel (8), nach einem der Ansprüche 1 bis 9, **gekennzeichnet durch** folgende Schritte:
- zuerst wird ein Spindelgewinde (19) auf der Getriebespindel (8) ausgebildet
- danach wird in einem Einstich-Bereich (31) das Spindelgewinde (19) abgetragen
- danach wird am Einstich-Bereich (31) und an benachbarten Haltebereichen (28, 38) ein Getriebezahnrad (5) aus Kunststoff um die Getriebespindel (8) angespritzt.

## Claims

1. Gear spindle (8), in particular for a seat adjustment system or a power steering system, having a spindle thread (19) for receiving a spindle nut (9), wherein a gearwheel (5) composed of plastic is molded rotationally conjointly on the gear spindle (8), which gearwheel has an external toothing (21) by means of which the gear spindle (8) can be set in rotational motion, wherein, within an axial extent (27) of the gearwheel (5), the gear spindle (8) has, between two retention regions (28, 38) of relatively large external diameter (29, 39), a recess region (31) of relatively small external diameter (30), **characterized in that** the external diameter (29, 39) of the two retention regions (28, 38) is formed by the outer circumference of the spindle thread (19), and the interposed recess region (31) of relatively small external diameter (31) is formed by removal of material of the spindle thread (19).

2. Gear spindle (8) according to Claim 1, **characterized in that** the gearwheel (5) is in the form of a worm wheel (5) which has an external worm toothing (21, 22) and which can be driven by means of a worm (4).

3. Gear spindle (8) according to one of the preceding claims, **characterized in that** the gearwheel (5) is arranged on an axial end (81) of the gear spindle (8), and the gearwheel (5) at least partially encloses a spherical element (48) which is formed as an axial abutment (11) of the threaded spindle (8).

4. Gear spindle (8) according to one of the preceding claims, **characterized in that** the gearwheel (5) has, axially on both sides of the external toothing (21), in each case axially extending radial bearing journals (23, 24) whose diameter (25) is in particular smaller than the base circle diameter (26) of the external toothing (21).

5. Gear spindle (8) according to one of the preceding claims, **characterized in that**, between the receiving region (17) of the spindle nut (9) and the retention region (28) facing toward said receiving region (17) - in particular partially within the axial extent (27) of the gearwheel (5) - there is arranged a mounting region (34) of relatively small external diameter (35) - preferably with the same external diameter (30) as the recess region (31).

6. Gear spindle (8) according to one of the preceding claims, **characterized in that** the recess region (31) has an axial extent (43) in the range from 2-12 mm, in particular in the range from 5-9 mm, and particularly preferably of 6-8 mm.

7. Gear spindle (8) according to one of the preceding claims, **characterized in that** the recess region (31) has an external diameter (30) of 8-10 mm and the retention regions (28, 38) have an external diameter (29, 39) of 11-13 mm, and in particular, the axial length (27) of the gearwheel (5) is between 20-30 mm, preferably approximately 25 mm.

8. Gear spindle (8) according to one of the preceding claims, **characterized in that** the difference between the external diameters (30, 29, 39) of the recess region (31) and of the retention regions (29, 39) is 2-4 mm, in particular approximately 3 mm, wherein said difference preferably corresponds to twice the tooth height (18) of the spindle gear (19) .

9. Gear spindle (8) according to one of the preceding claims, **characterized in that**, at least on the external diameter (29, 39) of one of the retention regions (28, 38), there is formed a knurling (50) or other radial formations (51) for forming a twist prevention means for the molded-on gearwheel (5) .

10. Spindle gear (1) having a gear spindle (8) according to one of the preceding claims, **characterized in that** the gearwheel (5) is mounted within a gear housing (61, 20), and the receiving region (17) of the gear spindle (8) projects out of the gear housing (20), and the gear spindle (8) is at least partially enclosed by a support element (40), wherein, under the action of an external axial force (54), the gearwheel (5) is supported by way of an axial face side (12) against the support element (40), and the support element (40) is in particular formed as part of a gear housing wall (36) which is arranged on the mounting region (34) of the gear spindle (8).

11. Spindle gear (1) having a gear spindle (8) according to one of the preceding claims, **characterized in that** the radial bearing journals (23, 24) of the gearwheel (5) are mounted within a housing main body (61) which is composed of plastic and which is enclosed by a metal bracket (71, 72, 73, 74) of the gear housing (20), and the spindle gear (1) has, in particular, an electric motor (2) which drives the gearwheel (5).

12. Method for producing a gear spindle (8) according to one of Claims 1 to 9, **characterized by** the following steps:
- firstly, a spindle thread (19) is formed on the gear spindle (8),
- subsequently, the spindle thread (19) is subjected to material removal in a recess region (31),
- subsequently, at the recess region (31) and at adjacent retention regions (28, 38), a gearwheel (5) is molded, from plastic, around the gear spindle (8).

## Revendications

1. Broche de transmission (8), en particulier pour le réglage d'un siège ou pour une direction assistée, comprenant un filetage de broche (19) pour recevoir un écrou de broche (9), une roue dentée de transmission (5) en matière plastique étant surmoulée par injection de manière solidaire en rotation sur la broche de transmission (8) et présentant une denture extérieure (21) au moyen de laquelle la broche de transmission (8) peut être mise en mouvement de rotation, la broche de transmission (8) présentant, entre deux régions de fixation (28, 38) ayant un plus grand diamètre extérieur (29, 39), à l'intérieur d'une étendue axiale (27) de la roue dentée de transmission (5), une région d'encoche (31) avec un diamètre extérieur inférieur (30),
**caractérisée en ce que** le diamètre extérieur (29, 39) des deux régions de fixation (28, 38) est réalisé par la périphérie extérieure du filetage de broche (19) et la région d'encoche (31) est réalisé entre celles-ci avec un diamètre extérieur inférieur (31) par enlèvement du filetage de broche (19).

2. Broche de transmission (8) selon la revendication 1, **caractérisée en ce que** la roue dentée de transmission (5) est réalisée sous forme de roue à denture hélicoïdale (5) présentant une denture hélicoïdale extérieure (21, 22) et pouvant être entraînée au moyen d'une vis sans fin (4).

3. Broche de transmission (8) selon l'une quelconque des revendications précédentes, **caractérisée en ce que** la roue dentée de transmission (5) est disposée au niveau d'une extrémité axiale (81) de la broche de transmission (8), et la roue dentée de transmission (5) entoure au moins en partie un élément de forme sphérique (48) qui est réalisée sous forme de butée axiale (11) de la broche filetée (8).

4. Broche de transmission (8) selon l'une quelconque des revendications précédentes, **caractérisée en ce que** la roue dentée de transmission (5) présente axialement des deux côtés de la denture extérieure (21) à chaque fois des tourillons de palier radiaux s'étendant axialement (23, 24), dont le diamètre (25) est notamment inférieur au diamètre du cercle de pied (26) de la denture extérieure (21).

5. Broche de transmission (8) selon l'une quelconque des revendications précédentes, **caractérisée en ce qu'**entre la région de réception (17) de l'écrou de broche (9) et la région de retenue (28) tournée vers cette région de réception (17), en particulier en partie à l'intérieur de l'étendue axiale (27) de la roue dentée de transmission (5), est disposée une région de montage (34) de plus petit diamètre extérieur (35), de préférence ayant le même diamètre extérieur (30) que la région d'encoche (31).

6. Broche de transmission (8) selon l'une quelconque des revendications précédentes, **caractérisée en ce que** la région d'encoche (31) présente une étendue axiale (43) de l'ordre de 2-12 mm, en particulier de l'ordre de 5-9 mm, et particulièrement préférablement de 6-8 mm.

7. Broche de transmission (8) selon l'une quelconque des revendications précédentes, **caractérisée en ce que** la région d'encoche (31) présente un diamètre extérieur (30) de 8-10 mm et les régions de retenue (28, 38) présentent un diamètre extérieur (29, 39) de 11-13 mm, en particulier la longueur axiale (27) de la roue de transmission (5) est comprise entre 20-30 mm, de préférence vaut environ 25 mm.

8. Broche de transmission (8) selon l'une quelconque des revendications précédentes, **caractérisée en ce que** la différence entre les diamètres extérieurs (30, 29, 39) de la région d'encoche (31) et des régions de retenue (29, 39) vaut 2-4 mm, en particulier approximativement 3 mm, cette différence correspondant de préférence au double de la hauteur des dents (18) de la transmission à broche (19).

9. Broche de transmission (8) selon l'une quelconque des revendications précédentes, **caractérisée en ce qu'**au moins au niveau du diamètre extérieur (29, 39) de l'une des régions de retenue (28, 38) est réalisé un moletage (50) ou d'autres formations radiales (51) afin de créer une fixation en rotation pour la roue de transmission surmoulée par injection (5).

10. Transmission à broche (1) comprenant une broche de transmission (8) selon l'une quelconque des revendications précédentes, **caractérisée en ce que** la roue dentée de transmission (5) est supportée à l'intérieur d'un boîtier de transmission (61, 20), et la région de réception (17) de la broche de transmission (8) fait saillie hors du boîtier de transmission (20), et la broche de transmission (8) est entourée au moins en partie par un élément d'appui (40), la roue dentée de transmission (5), lors de l'application d'une force extérieure axiale (54), s'appuyant par un côté frontal axial (12) contre l'élément d'appui (40), et l'élément d'appui (40) étant réalisé notamment sous forme d'une partie d'une paroi de boîtier de transmission (36) qui est disposée au niveau de la région de montage (34) de la broche de transmission (8).

11. Transmission à broche (1) comprenant une broche de transmission (8) selon l'une quelconque des revendications précédentes, **caractérisée en ce que** les tourillons de palier radiaux (23, 24) de la roue dentée de transmission (5) sont supportés à l'intérieur d'un corps de base de boîtier (61) en matière plastique, qui est entouré par un étrier en métal (71, 72, 73, 74) du boîtier de transmission (20), et la transmission à broche (1) présente notamment un moteur électrique (2) qui entraîne la roue dentée de transmission (5).

12. Procédé pour fabriquer une broche de transmission (8) selon l'une quelconque des revendications 1 à 9, **caractérisé par** les étapes suivantes .
- tout d'abord un filetage de broche (19) est réalisé sur la broche de transmission (8),
- ensuite, dans une région d'encoche (31), le filetage de broche (19) est enlevé,
- et ensuite, au niveau de la région d'encoche (31) et au niveau de régions de retenue adjacentes (28, 38), une roue dentée de transmission (5) en matière plastique est surmoulée par injection autour de la broche de transmission (8).
